# EUROPEAN PATENT APPLICATION

(11) **EP 4 095 727 A1**
(43) Date of publication of application: **30.11.2022**
(21) Application number: 21216776.1
(22) Date of filing: 22.12.2021
(51) Int. Cl.: G06F 21/56

(54) **SYSTEM AND METHOD FOR DETECTING POTENTIALLY MALICIOUS CHANGES IN APPLICATIONS**

(30) Priority: 28.05.2021 RU 2021115371; 17.11.2021 US 202117528270
(71) Applicant: AO Kaspersky Lab, Moscow 125212 (RU)
(72) Inventor: KIVVA, Anton A., 125212 MOSCOW (RU); PIKMAN, Lev V., 125212 MOSCOW (RU); GOLOVIN, Igor A., 125212 MOSCOW (RU)
(74) Representative: Chimini, Francesco

(57) **Abstract**

Disclosed herein are systems and methods for detecting potentially malicious changes in an application. In one example, an exemplary method comprises, selecting a first file to be analyzed and at least one second file similar to the first file, for each of the at least one second file, calculating at least one set of features, identifying a set of distinguishing features of the first file by finding, for each of the at least one second file, a difference between a set of features of the first file and the calculated at least one set of features of the second file, and detecting a presence of potentially malicious changes in the identified set of distinguishing features of the first file.

## Description

### FIELD OF TECHNOLOGY

The present disclosure relates to the field of information security, e.g., by detecting potentially malicious changes in applications.

### BACKGROUND

Nowadays, mobile operating systems (Android in particular) are gaining in popularity. The software they use is evolving at a rapid pace. Software updates are released on a regular basis, in which manufacturers correct errors and release updated versions of the software with new functionality. Software are often distributed in the form of archive files that contain application files, digital signatures for files, and a certificate with which the files are signed.

In order to induce a victim into visiting a fake site, attackers may use bulk or individually addressed email messages that masquerade as messages sent by a work colleague, a bank employee, or a representative of a government agency. However, these messages contain a malicious link. The text included in the message instructs or requires the victim to click on the link and immediately perform certain actions in order to avoid threats or some kind of serious consequences. Another approach fraudsters employ involves using an attachment in the form of a file that also contains malicious links or exploits vulnerable applications to further compromise the user's computer.

In addition, the types and numbers of malicious software (such as computer viruses, Trojans, and network worms) continue to increase. The malicious software is typically aimed at both causing damage to user data and harming the actual user of an electronic device infected with the malicious software. The damage may include corruption or deletion of user files, use of the computing resources of a user's device for "mining" cryptocurrencies, theft of confidential user data (correspondence, images, login names, passwords, bank card data), and other activities. In addition, malicious software is constantly changing as its authors adopt new methods of attack and adopt to avoid detection by security applications. Malicious software codes use various mechanisms. In one example, obfuscation of malicious codes may be used to change the appearance of source text or executable code of a program while preserving its functionality and making it more difficult to analyze, understand the operating algorithms, and modify the malicious code during de-compilation. In another example, the use of mechanisms to counteract emulation may be applied. For instance, the malicious software may be provided functionalities for recognizing that it is being executed in an emulator - thereby enabling the malicious code to avoid exhibiting a malicious activity.

One way to create malicious applications for mobile operating systems is: to embed malicious code into a legitimate application, where the legitimate application is used as a basis, and to modify the legitimate application by repackaging the archive and adding malicious functionality. Detecting such applications in which malicious codes are embedded with heuristic anti-virus analysis methods is problematic, because often a minimum amount of dangerous functionality is located in one file with a significant amount of secure functionality. Thus, attempts to make a generalized heuristic search for malicious code leads to a large number of false positives. For example, a known case of such application is the "Cam Scanner" application, which is available for installation via Google Play. In one version, at a time when the application had more than a hundred million installations, a malicious module was added to the application during one of the updates. As far as is known, a contract was made with a partner company, but along with the advertising the partner company provided a module that contained malicious code. Application developers are not analysts or security experts, so they simply built the module into the application themselves. It turned out, that malicious code was found in one hundred million installations of the application.

In another example, it is also known that advertising service companies are "balanced" on the edge, providing their advertising modules as part of partnership agreements with developers, but sometimes they "overstep" the limit. Their modules contain legitimate code, but which causes harm to users. For example, such a module can send an SMS (which is legitimate, since this is a function of a mobile device, but such an action has a financial impact on users) or read previously received messages (which is also legitimate, but should only be allowed for selected applications, otherwise it can cause harm in the form of access to sensitive user data). There are also cases of intentional modifications being delivered with the addition of malicious code.

In addition, there are applications that fall under the category of "riskware". Such applications are potentially dangerous, for example, remote administration applications can be used as backdoors, especially if they allow hidden launching and operation without any user notification of their operation.

Therefore, there is a need for a method and a system for improving information security, e.g., by detecting malicious applications.

### SUMMARY

Aspects of the disclosure relate to information security, more specifically, to systems and methods of detecting potentially malicious changes in applications. For example, the method of the present disclosure is designed to create a solution that allows the search space for malicious code to be reduced to a relatively small set of data while significantly increasing the operational accuracy of heuristic rules when identifying an application that has been modified or an application to which malicious functionality has been added.

In one example, a method is provided for detecting potentially malicious changes in applications, the method comprising: selecting a first file to be analyzed and at least one second file similar to the first file, for each of the at least one second file, calculating at least one set of features, identifying a set of distinguishing features of the first file by finding, for each of the at least one second file, a difference between a set of features of the first file and the calculated at least one set of features of the second file, and detecting a presence of potentially malicious changes in the identified set of distinguishing features of the first file.

In one example, the similarity of the at least one second file with the first file is based on at least one of: names of the first file and the at least one second file, and versions of the first file and the at least one second file.

In one example, the at least one set of features comprises at least a hash of a dex-class.

In one example, the hash of the dex-class is calculated from at least one of: a code of a class without taking into account names of classes, or from the code of the class without taking into account names of methods of the class.

In one example, the at least one set of features comprises at least one of: information obtained from a manifest of the first file, information about requested permissions of the first file, and information about a presence of encrypted resources in the first file.

In one example, the presence of potentially malicious changes are detected using a method based on at least one of: heuristic analysis or signature analysis.

In one example, the potentially malicious change comprises at least one of: a change that indicates a presence of an application programming interface function that is known as being untrustworthy; and change that indicates a presence of at least one code loader.

In one example, the file selected to be analyzed comprises an application installation file for mobile devices.

In another example, a system is provided for detecting potentially malicious changes in applications, the system comprising a hardware processor configured to: select a first file to be analyzed and at least one second file similar to the first file, for each of the at least one second file, calculate at least one set of features, identify a set of distinguishing features of the first file by finding, for each of the at least one second file, a difference between a set of features of the first file and the calculated at least one set of features of the second file, and detect a presence of potentially malicious changes in the identified set of distinguishing features of the first file.

The method and system of the present disclosure are designed to provide information security, in a more optimal and effective manner, enabling legitimate modifications of applications to proceed while detecting applications that are modified to be malicious. Thus, in one example, the technical result of the present disclosure includes detecting potentially malicious changes in applications. In another example, the technical result includes reducing the number of applications that are falsely identified as being malicious. In yet another example, the technical result comprises providing information security by blocking malicious modifications of applications.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig. 1** illustrates a block diagram of an exemplary system for detecting potentially malicious changes in an application.
**Fig. 2** illustrates a method for detecting potentially malicious changes in an application.
**Fig. 3** presents an example of a general purpose computer system on which examples of systems and methods of the present invention can be implemented.

### DETAILED DESCRIPTION

Exemplary aspects are described herein in the context of a system, method, and a computer program for detecting potentially malicious changes in an application. Those of ordinary skill in the art will realize that the following description is illustrative only and is not intended to be in any way limiting. Other aspects will readily suggest themselves to those skilled in the art having the benefit of the disclosure. Reference will now be made in detail to implementations of the example aspects as illustrated in the accompanying drawings. The same reference indicators will be used to the extent possible throughout the drawings and the following description to refer to the same or like items.

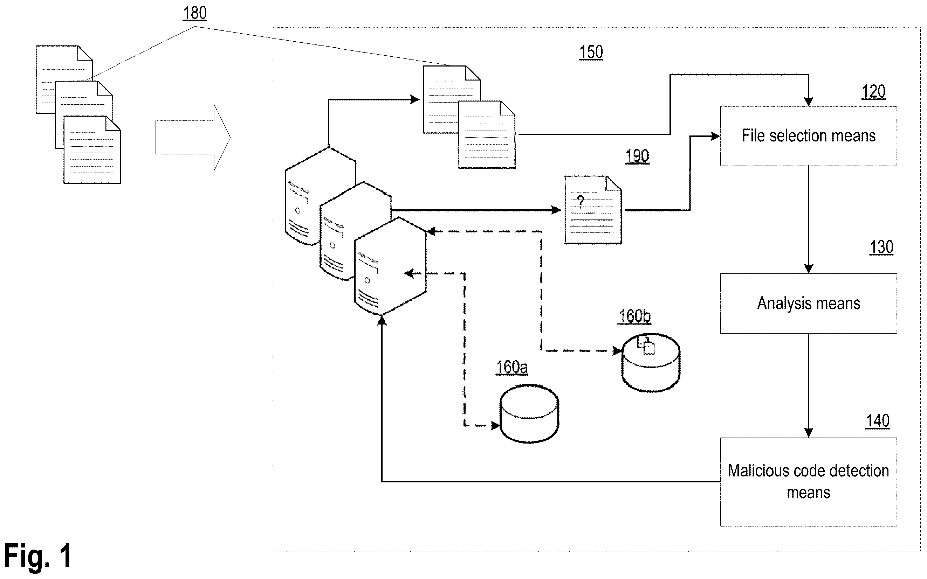

**Fig. 1** a block diagram of an exemplary system **100** for detecting potentially malicious changes in an application. In one example, the system for detecting potentially malicious changes in an application comprises at least: a file selector **120,** a file analyzer **130,** and a malicious code detector **140.**

In one example, the system **100** is implemented on a remote server. In one example, the remove server comprises a cloud security service **150** (also referred to as a cloud service **150**). An example of the cloud service **150** is the Kaspersky Security Network (KSN).

In one example, the file selector **120** is designed to select files **180** for further analysis for potentially malicious changes.

In one example, at least one file **180** is an installation file for an application of mobile devices.

In another example, at least one file **180** is an archive containing at least one executable file. Potentially malicious changes are changes to the file **180** that contain one or more additional functionalities that could cause damage to the user's device or data, if used. Any such identified potentially malicious change may require an additional in-depth analysis of its contents, in order to detect malicious content embedded therein.

In one example, the files **180** are stored in the cloud service **150,** for example, in the database **160a** or in the file storage **160b.** At the same time, the files **180** may be obtained by the cloud service **150** from agents installed on mobile devices of the users connected to the cloud service **150.** In one example, the files **180** are obtained from the agents installed on the mobile devices of the users via communication channels known in the relevant art. In one example, the files **180** are obtained from agents hosted on various resources that collect the files **180** from those resources (file sharing services, forum sites, social media sites/applications). In another example, the cloud service **150** collects or receives files using its own tools (not shown in Fig. 1) that, for example, interact with the application programming interface (API) of digital application stores (for example, Google Play) or directly from the information resources of application manufacturers.

In one example, each file **180** received by the cloud service **150** or via agents installed on mobile devices is analyzed by an additional anti-virus scan. Then, when the analysis indicates that the file **180** does not contain a malicious code, the file **180** is marked as trusted. If the received file **180** has not been verified by an anti-virus scan as being a file that does not contain a malicious code, the file **180** is marked as untrusted.

In general, the file selector **120** selects, from a set of files, a file **190** for analysis. In addition, the file selector **120** selects, at least one file **180** that is similar to the file **190** that is already selected to be analyzed.

In one example, the file **190** to be analyzed is selected by the file selector 120 from files received by the cloud service **150** from agents, wherein the files were not analyzed for malicious content by the cloud service **150.**

In one example, the file **180** is trusted.

In another example, the file **180** is untrusted. Thus, for identifying similarity with the file **190** that is selected to be analyzed, the method of the present disclosure may choose both trusted and untrusted similar files **180.**

In one example, the file selector **120** determines the similarities of files based on at least one of the following features:
- a name of the file **190;**
- a version of the file **190;**
- a number of files inside the file **190;**
- date and time of receipt of the file **190** by the cloud service **150;** and
- other features that allow similarity between files to be determined.

In one example, the selected files **180** and **190** are passed to the file analyzer **130** by the file selector **120.**

In one example, the file analyzer **130** calculates at least one set of distinguishing file features for the selected similar files **180** and the file **190** that is selected to be analyzed.

In one example, the distinguishing file features include at least one of:
- a hash of a dex-class, wherein the hash is calculated by the file analyzer **130** based on a class code without taking into account names of classes, names of the class variables, and without taking into account names of the class methods;
- information obtained from a manifest of the file **190;**
- information about requested permissions of the file **190;**
- a presence of resources in the file **190,;**
- a presence of so-libraries in the file **190;** and
- other data about the file **190** that can be presented as an unordered set.

In one example, when the distinguishing file features include the presence of resources in the file **190,** the resources comprise encrypted resources.

It is worth noting that the sets of distinguishing file features may be calculated from individual features of: the file **190** that is selected to be analyzed, the files **180** selected as being similar to the file **190** which is selected to be analyzed, or any combination of features of the file **190** that is selected to be analyzed and the files **180** selected as being similar to the file **190.**

For example, if there is a file (A) and a potentially modified file (B) to be analyzed, the file analyzer **130** calculates one or more sets of individual features of the files (A) and (B) as follows:
- S(t, A) and S(t, B), where t is the file feature.

The file analyzer **130** then calculates the set of distinguishing features of the files, while performing an operation to find the difference of the sets; that is, from the set of features of the file **190** to be analyzed it subtracts the set of features of each selected similar file **180:**
- S(t, B) - S(t, A) = Sm(t, BA).

It is worth noting that the file analyzer **130** can use methods of finding the difference of sets as known in the relevant art. The choice of method for finding the difference of the sets depends on the file feature (t) and can be modified by the file analyzer **130** to improve the quality of the results.

In one example, the sets Sm(t, BA) of distinguishing file features are passed by the file analyzer **130** to the malicious code detector **140.**

In one example, the malicious code detector **140** detects potentially malicious changes in the resulting sets of file features after the subtraction.

In one example, the potentially harmful changes comprise at least one of:
- a presence of API functions known not to be trusted (for example, sending an SMS, sending an email, sending a message, requests for payment);
- a presence of loaders that use loading of code from encrypted files, or use code loading from sections of files not intended for code storage, or use code loading from third-party servers; and
- a presence of obfuscated code.

In one example, the malicious code detector **140** uses heuristic analysis methods known in the relevant art for identifying potentially malicious changes.

In one example, the malicious code detector **140** uses signature analysis techniques known in the relevant art for identifying potentially malicious changes.

In one example, the malicious code detector **140** calculates a degree of severity of harmful changes in the file **190** to be analyzed. In one example, the degree of severity of the harmful changes is specified using a range of values, e.g., where 0 represents a guaranteed safe file and 100 represents a guaranteed malicious file. In one example, the degree of severity of the harmful changes to the file **190** can be calculated by combining weights of the potentially malicious changes and the number of potentially malicious changes.

In one example, when potentially malicious changes are detected, if the degree of severity associated with the malicious code exceeds a certain threshold value, the malicious code detector **140** sends the file **190** to the cloud service **150** for more thorough analysis.

In one example, the malicious code detector **140,** based on the degree of severity of the harmful changes to the file selected to be analyzed **190,** may transfer, the file **190** to a device of an information security specialist for analysis.

Examples of the system **100** detecting the potentially malicious changes in an application.

In one example, the method of the present disclosure is applied to detect malicious changes to applications used by advertising services. These malicious changes are based on a well-known popular technique among advertising companies that provide unscrupulous advertising services. These unscrupulous companies add a loader to the application itself, where a file with an encrypted code is added to the resources of the distribution file (apk). The dex-file in the file **190** that is being analyzed is changed only slightly, i.e., only the loader code is added. Individually, each such change is insignificant and the application would be identified as safe when being analyzed by systems without the benefit of the teachings of the present disclosure. If, however, an application from such unscrupulous companies is analyzed by the system of the present disclosure, the result will be as follows.

The file selector **120** selects similar files from the application in the apk format: a trusted file **180** and the file **190** which is selected to be analyzed.

Then, the file analyzer **130** analyzes the selected files and obtains the following as a result:
- a trusted file **180,** one folder of which contains 50 files as a result of the operation of the file analyzer **130,** and
- a file **190** to be analyzed, which contains 51 files in the same folder.

As a result of the analysis, the 51st file of the file **190** is determined as being: a file having an unknown type, a file that is encrypted, and a file that possesses a very high entropy. In addition, a modified dex-file, located in the file **190,** will be detected from a file located in the trusted file **180.** The malicious code detector **140** uses heuristic analysis methods to determine that the 51st file is a loader that downloads codes from an encrypted file, and thereby identifies potentially malicious changes to the file **190** that is selected to be analyzed.

In one example, as a result of the determination via the heuristic analysis, file **190** is sent by the malicious code detector **140** to the cloud service **150** for more in-depth analysis.

In one example, in addition, information about the results of the analysis by the file analyzer **130** may also be sent along with the file **190.**

In one example, the method of the present disclosure is applied to detect malicious changes to applications, the file selector **120** chooses two similar files. The trusted file **180** is obtained from an official store (such as Google Play). The file **190** to be analyzed with a similar package name and version is received from a third-party web site that distributes applications.

Then, suppose the file analyzer **130** has detected an unusual dex-file in the file **190** and the detected unusual dex-file is sent to the malicious code detector **140** for analysis. Then, using heuristic analysis, the malicious code detector **140** detects a loader in the above file (dex-file) and downloaded code in the "Android support" Java package.

It is important to note that the "Android support" Java package is included in most applications and usually contains only "default" code added by the AndroidStudio compiler. Consequentely, this package is usually not checked, by default. As a result, this file **190** to be analyzed is sent by the malicious code detector **140** to the cloud service **150** for more in-depth analysis.

In another example, when a similar file **180** is not selected by the file selector **120** for the file **190** to be analyzed, the present system functions and perform actions using the file analyzer **130** and the malicious code detector **140.** For example, suppose a file **190** which has a small size is obtained to be analyzed. Suppose the file **190** does not have a software platform (framework) and can send SMS messages. As a result, the file selector **120** may not select a similar file **180,** and the file analyzer **130** determines a set of distinguishing features of the file that contains all the code of the file **190** to be analyzed. Then, the malicious code detector **140,** using a signature or heuristic analysis method, detects in the code API function calls that send SMS messages. Then, the file **190** will be sent to the cloud service **150** for more in-depth analysis.

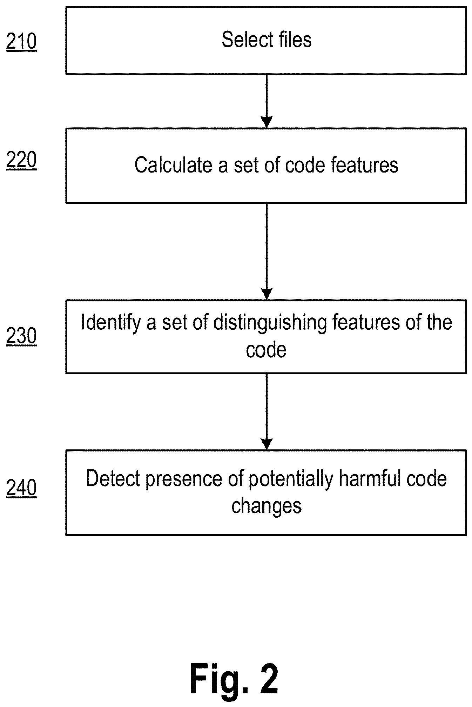

**Fig. 2** illustrates a method **200** for detecting potentially malicious changes in an application.

In step **210,** using the file selector **120,** method **200** selects a file **190** to be analyzed and selects at least one file **180** that is similar to a file **190** that is selected to be analyzed.

In one example, the file **190** that is selected to be analyzed comprises an installation file for an application intended to be used by mobile devices.

In one example, the file **190** that is selected to be analyzed comprises an archive containing at least one executable file.

In one example, the at least one file **180** that that is similar to the file **190** is selected based on a file similarity determined based on at least one of the following features:
- a name of the file **190** that is selected to be analyzed;
- a version of the file **190** that is selected to be analyzed;
- a number of files inside the file **190** that is selected to be analyzed;
- a date and time of receipt of the file **190** that is selected to be analyzed by a cloud service **150;** and
- any other feature that allows the similarity between files to be determined.

In step **220,** by the file analyzer **130,** for each file **180** selected as being similar to the file **190,** method **200,** calculates at least one set of features. The set of features of the files and their calculation are discussed in detail in conjunction with the description of **Fig. 1****.**

In one example, the set of features comprises at least a hash of a dex-class, which is calculated from at least one of: a code of a class without taking into account names of classes or from the code of the class without taking into account the names of methods of the class.

In one example, the set of features comprises: information obtained from a manifest of the file **190,** information about requested permissions of the file **190,** or information about a presence of encrypted resources in the file **190.**

In step **230,** using the file analyzer **130,** method **200** identifies a set of distinguishing features of the file **190** selected to be analyzed. In one example, the set of distinguishing features of the file are identified by finding a difference between sets of code features of the file **190** and each selected file **180.** The file analyzer **130** may use methods of finding the difference between sets of features, as known in the relevant art. The choice among various methods of finding the difference between the sets of features depends on the file feature.

In one example, the method of finding the difference may be modified by the file analyzer **130** in order to improve the quality of the results.

In step **240,** using the malicious code detector **140,** method 200 detects potentially malicious changes in the sets of distinguishing file features.

In various examples, the malicious code is identified by heuristic analysis and/or by signature analysis. The potentially malicious changes are described above in conjunction with the description of **Fig. 1****.**

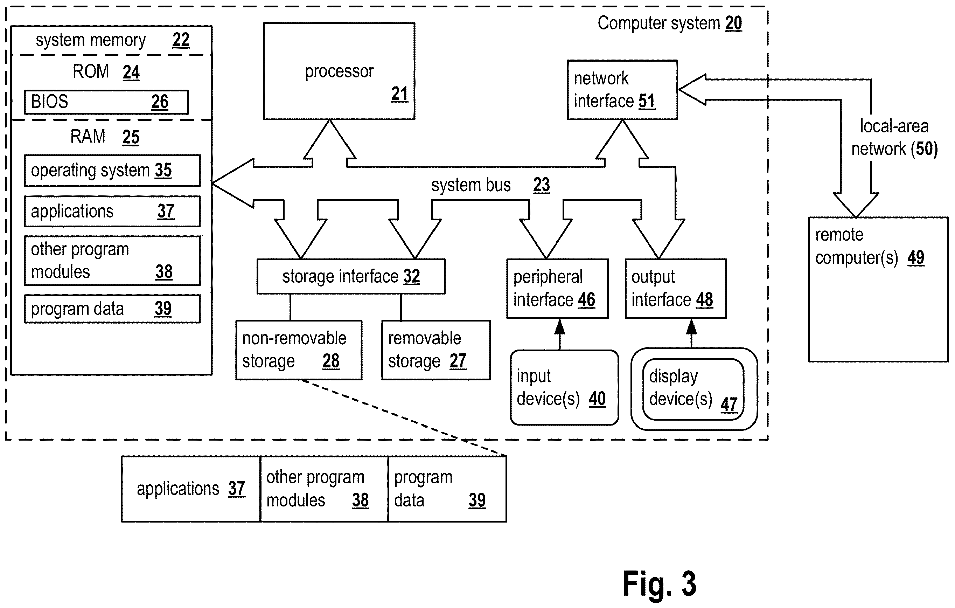

**Fig. 3** is a block diagram illustrating a computer system 20 on which examples of systems and methods for detecting potentially malicious changes in an application may be implemented. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit 21 (also referred to as a processor) can include a single or multiple sets of processors having single or multiple cores. The processor 21 may execute one or more computerexecutable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

The present invention may be implemented as a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a specialpurpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 3****,** above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and timeconsuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various examples disclosed herein encompass present and future known equivalents to the known modules referred to herein by way of illustration. Moreover, while examples and applications have been shown and described, it would be apparent to those skilled in the art having the benefit of this disclosure that many more modifications than mentioned above are possible without departing from the inventive concepts disclosed herein.

## Claims

1. A method for detecting potentially malicious changes in an application, the method comprising:
selecting a first file to be analyzed and at least one second file similar to the first file;
for each of the at least one second file, calculating at least one set of features;
identifying a set of distinguishing features of the first file by finding, for each of the at least one second file, a difference between a set of features of the first file and the calculated at least one set of features of the second file; and
detecting a presence of potentially malicious changes in the identified set of distinguishing features of the first file.

2. The method according to claim 1, wherein the similarity of the at least one second file with the first file is based on at least one of: names of the first file and the at least one second file, and versions of the first file and the at least one second file.

3. The method according to any of claims 1 to 2, wherein the at least one set of features comprises at least a hash of a dex-class.

4. The method according to claim 3, wherein the hash of the dex-class is calculated from at least one of: a code of a class without taking into account names of classes, or from the code of the class without taking into account names of methods of the class.

5. The method according to any of claims 1 to 4, wherein the at least one set of features comprises at least one of:
information obtained from a manifest of the first file,
information about requested permissions of the first file, and
information about a presence of encrypted resources in the first file.

6. The method according to any of claims 1 to 5, wherein the presence of potentially malicious changes are detected using a method based on at least one of: heuristic analysis or signature analysis.

7. The method according to any of claims 1 to 6, wherein potentially malicious change comprises at least one of:
a change that indicates a presence of an application programming interface function that is known as being untrustworthy; and
a change that indicates a presence of at least one code loader.

8. The method according to any of claims 1 to 7, wherein the file selected to be analyzed comprises an application installation file for mobile devices.

9. A system for detecting potentially malicious changes in an application, comprising:
at least one processor configured to:
select a first file to be analyzed and at least one second file similar to the first file;
for each of the at least one second file, calculate at least one set of features;
identify a set of distinguishing features of the first file by finding, for each of the at least one second file, a difference between a set of features of the first file and the calculated at least one set of features of the second file; and
detect a presence of potentially malicious changes in the identified set of distinguishing features of the first file.

10. The system according to claim 9, wherein the similarity of the at least one second file with the first file is based on at least one of: names of the first file and the at least one second file, and versions of the first file and the at least one second file.

11. The system according to any of claims 9 to 10, wherein the at least one set of features comprises at least a hash of a dex-class.

12. The system according to claim 11, wherein the hash of the dex-class is calculated from at least one of: a code of a class without taking into account names of classes, or from the code of the class without taking into account names of methods of the class.

13. The system according to any of claims 9 to 12, wherein the at least one set of features comprises at least one of:
information obtained from a manifest of the first file,
information about requested permissions of the first file, and
information about a presence of encrypted resources in the first file.

14. The system according to any of claims 9 to 13, wherein the presence of potentially malicious changes are detected using a method based on at least one of: heuristic analysis or signature analysis.

15. The system according to any of claims 9 to 14, wherein potentially malicious change comprises at least one of:
a change that indicates a presence of an application programming interface function that is known as being untrustworthy; and
a change that indicates a presence of at least one code loader.
